# EUROPEAN PATENT APPLICATION

(11) **EP 3 706 506 A1**
(43) Date of publication of application: **09.09.2020**
(21) Application number: 18741401.6
(22) Date of filing: 17.01.2018
(51) Int. Cl.: H04W 88/10, G07B 15/00

(54) **SYSTEM AND METHOD FOR IDENTIFYING MOBILE DEVICES VIA WI-FI WITHOUT NEEDING A CONNECTION**

(30) Priority: 17.01.2017 MX 2017000742
(71) Applicant: Belhareth, Sonia, 11560 Mexico City (MX); Gray Muñoz, Robin Laurence Ignacio, 11560 Mexico City (MX)
(72) Inventor: BELHARETH, Sonia, 11560 Mexico City (MX)
(74) Representative: Melinon, Pascaline
(86) International application number: PCT/MX2018/050003
(87) International publication number: WO 2018/135936

(57) **Abstract**

The present invention refers to a system and method for the identification of mobile devices via Wi-Fi or by means of other wireless communication protocols, without the need of a connection, and without the need for Internet, SMS, a SIM card, GPS or a network connection.

Once the mobile device has been identified it is possible to actuate and/or control a great many functions applicable to various sectors, such as the payment of services, payment of tolls, payment of parking, access control to a car and control of a smart home, among many others.

## Description

### Field of the Invention

The present invention lies in the field of telecommunication systems and identification methods, and particularly relates to a system and method for the identification of mobile devices via Wi-Fi, without the need to establish a connection, and without the need for Internet, sms, a SIM card, GPS or a network connection, given that the invention only uses one or more mobile devices as "hotspots" or access points when their Wi-Fi modules are enabled.

### Background

Currently, the use of mobile devices such as smartphones, tablet computers, personal computers, etc., or any other device with a Wi-Fi module has increased exponentially worldwide. This growth is due to the technological capabilities of these devices, which have allowed their introduction in various fields, amongst which are the paying of services and access control.

In particular, mobile devices have been used to make payments for services such as tolls and parking, among others. For example, US 8587454 B1 relates to a system and method for the payment of tolls via a wireless mobile device, wherein said device is linked to a specific vehicle and a bank account belonging to a service provider, third parties or tolling authorities. In such system "virtual" toll booths are defined and a network of WI-FI hotspots, GPS or the cellular network are used to establish the user's location. However for this invention the system requires a connection to the cellular network or Internet, and as mentioned above the system requires the cellular network and / or the use of GPS and / or scanning of wireless networks to identify its position. Therefore the use of this system has significant limitations when the mobile device does not have the above capabilities.

Moreover the invention described in US 5991749 A relates to the use of cellular telephones and other analog or digital wireless communication devices to conduct transactions and activities, among which is the payment of toll booths.

As explained in that document, traffic signals give the driver the unique code to pay a toll, which is introduced into the phone by the user. As the user approaches the toll booth they press "SEND" to effect the billing function and pay the toll. However, for the driver to have to enter a code implies they must divert their attention while driving and may cause an accident. It is also possible that the user will make a mistake when entering the code and the transaction will not be carried out.

As to US 20130090991 A, it discloses an apparatus, a system and a method for the payment of tolls with smart phones, where the user device sends an encrypted payment signal (with Wi-Fi) to the tolling booth when the device is approaching it, at a predetermined distance.

Among the configurations given in that document it mentions that it may include communication with the user device via email, SMS, or communication through the web, which makes it a pretty slow system as far as the time to authorize a transaction. Furthermore it requires access to the mobile network and two-way communication between the mobile device and the client.

Moreover US 20140029512 A relates to a system for establishing a "passpoint" connection between a mobile station and an access point using an improved single SSID method or double SSID method, in order to connect with Wi-Fi access points and authenticating the device.

In this document is described a system by which communication with the mobile device is through a Wi-Fi connection between a mobile station and a hotspot. A data exchange between the two is required in order to achieve registration, using an Internet protocol with a predefined number of "packets". However this system, once more, is too slow to be used for example in a tollbooth or parking because of the connection times between the mobile device and the toll payment system.

In addition to the speed limitation described, as mentioned above there is the problem that the way of connection in which several of these solutions is based (for example mobile network or Wi-Fi) may not be available in the area or at the time when a user wants to use the system.

Taking into account the existing state the art, it is evident that there is a need for a system that overcomes the above limitations, so the identification of a user and any subsequent required action may be quick, easy, reliable and safe for the user.

### Summary

It is therefore an objective of the present invention to provide a system and method for the identification of mobile devices via Wi-Fi without the need of a connection, which will allow the identification and location of mobile devices via Wi-Fi when these are in the detection range of a Wi-Fi antenna.

Another objective of the present invention is to provide a system and method for the identification of mobile devices via Wi-Fi without the need of a connection, which will provide various levels of communication to suit a wide range of application cases.

Another objective of the present invention is to provide a system and method for the identification of mobile devices via Wi-Fi without the need of a connection, which will provide various levels of security to accommodate a large number of application cases.

Another objective of the present invention is to provide a system and method for the identification of mobile devices via Wi-Fi without the need of a connection, which in one of its communication levels will allow another object or system to perform one or more predetermined actions such as payment of services, toll collection, parking payment and access control, without the need to establish a connection between the user's mobile device and said object or system.

Another objective of the present invention is to provide a system and method for the identification of mobile devices via Wi-Fi without the need of a connection, which in one of its communication levels will allow another object or system to perform one or more actions, by means of commands, without the need to establish a connection between the user's mobile device and said object or system.

Another objective of the present invention is to provide a system and method for the identification of mobile devices via Wi-Fi without the need of a connection, which in one of its communication levels will allow another object or system to perform one or more actions, by means of an optional connection between the user's mobile device and said object or system.

Another objective of the present invention is to provide a system and method for the identification of mobile devices via Wi-Fi without the need of a connection, which will provide varying levels of security for each communication level.

Another objective of the present invention is to provide a system and method for the identification of mobile devices via Wi-Fi without the need of a connection, which can operate automatically, semi-automatically or manually.

Another objective of the present invention is to provide a system and method for the identification of mobile devices via Wi-Fi without the need of a connection, which can operate without the need for the mobile device to have a cellular network connection or one of any other type, Internet, Bluetooth, SMS, GPS or SIM card.

Another objective of the present invention is to provide a system and method for the identification of mobile devices via Wi-Fi without the need of a connection, which in one or more of its embodiments can operate and react more quickly than systems and methods that use communication or connection with the mobile device.

Another objective of the present invention is to provide a system and method for the identification of mobile devices via Wi-Fi without the need of a connection, which will allow the replacement of a multitude of identification devices such as TAGs or RFID cards.

Another objective of the present invention is to provide a system and method for the identification of mobile devices via Wi-Fi without the need of a connection, which will have a greater detection range than other devices, such as TAGs or RFID cards.

Another objective of the present invention is to provide a system and method for the identification of mobile devices via Wi-Fi without the need of a connection, which will allow for the creation of user accounts, among other things for billing purposes and accepting various forms of payment.

Another objective of the present invention is to provide a system and method for the identification of mobile devices via Wi-Fi without the need of a connection, which will prevent the credit and the user account from being lost if the mobile device is lost, stolen or damaged, as happens with RFID tags and devices.

Another objective of the present invention is to provide a system and method for the identification of mobile devices via Wi-Fi without the need of a connection, whose applications and databases, in certain cases, are connected to central servers, in order to identify and track the user.

Another objective of the present invention is to provide a system and method for the identification of mobile devices via Wi-Fi without the need of a connection, which will allow users to manage their accounts by themselves through their mobile devices, the Internet and / or private network servers, and allow them to view the status of their operations.

Another objective of the present invention is to provide a system and method for the identification of mobile devices via Wi-Fi without the need of a connection, which will allow one to find out through central servers and / or virtual cloud servers, if a user has activated a service associated with their mobile device.

Another objective of the present invention is to provide a system and method for the identification of mobile devices via Wi-Fi without the need of a connection, which in one of its embodiments, will allow warning the user that they are entering a charging zone without their device being activated and / or without sufficient credit in their account.

Another objective of the present invention is to provide a system and method for the identification of mobile devices via Wi-Fi without the need of a connection, which can be accessed through multiple mobile devices with the same user account.

A further objective of the present invention is to provide a system and method for the identification of mobile devices through wireless communication protocols other than Wi-Fi (such as Bluetooth or others) without the need of a connection, which will meet the above mentioned objectives.

### Brief Description of the Drawings / Figures

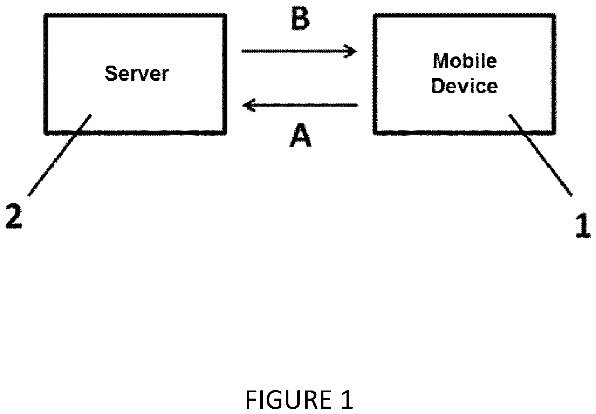

Figure 1 contains a diagram showing communication between the mobile device (1) and the server (2) during pre-registration, where it can be seen that in the first step (A) a user account is created using the mobile application of the service for which access is sought, where in the second step (B), the server (2) sends an encrypted configuration file to the mobile device (1) to enable the application installed in said mobile device (1). Alternatively the user account may also be created through the website of the service for which access is sought.

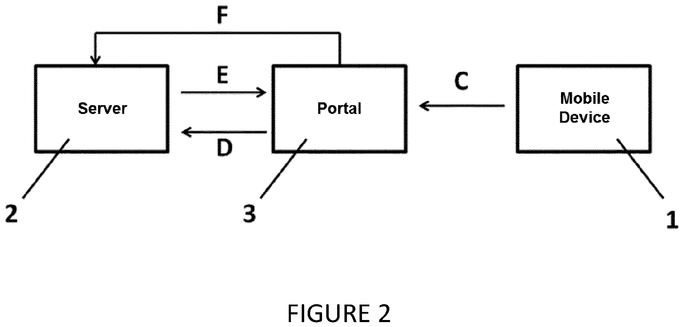

Figure 2 contains a diagram showing the identification of the mobile device (1), as well as the communication between the server (2) and the portal (3) during operation of the system, where it can be seen that in a first step (C), the detecting Wi-Fi antenna which is a part of the portal (3) which controls access, detects the mobile device (1) together with other information pertaining to the mobile device (1), where in a second step (D) the portal (3) sends such information to the server (2), which verifies the information received, where in a third step (E), if the information is correct, the server (2) notifies the portal (3) to proceed with the necessary action, such as opening highway access, access to a car, etc., where in the fourth step (F), the portal (3) confirms to the server (2) if the action was carried out successfully, to carry out a notification or other corresponding action.

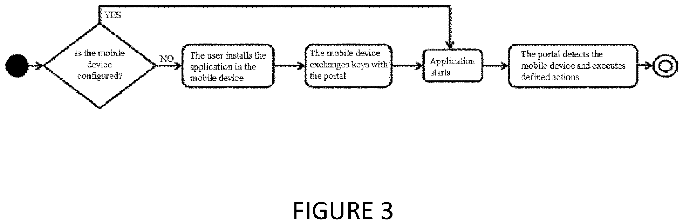

Figure 3 contains a flow chart showing the general steps corresponding to the method of identification of the present invention, where in step 1 the user installs the application in the mobile device (1), in Step 2 the mobile device (1) exchanges keys with the portal (3), in Step 3 the application is started, and in Step 4 the portal (3) detects the mobile device (1) and runs defined actions.

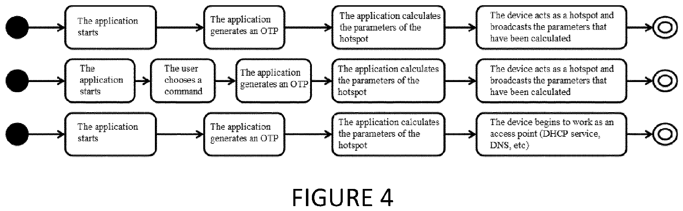

Figure 4 contains three flow lines showing the three possible cases for Step 3, corresponding to the identification method of the present invention, where the first flow line corresponds to the first level communication, the second flow line corresponds to the second level of communication, and the third flow line corresponds to the third level communication.

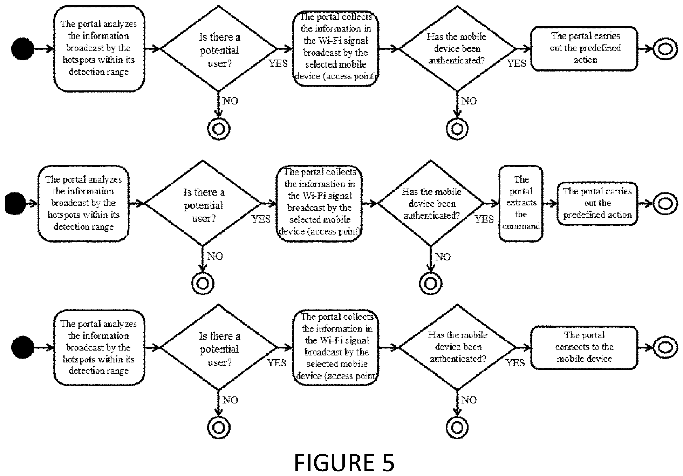

Figure 5 contains three flow lines showing the three possible cases for Step 4, corresponding to the identification method of the present invention, where the first flow line corresponds to the first level communication, the second flow line corresponds to the second level of communication, and the third flow line corresponds to the third level communication.

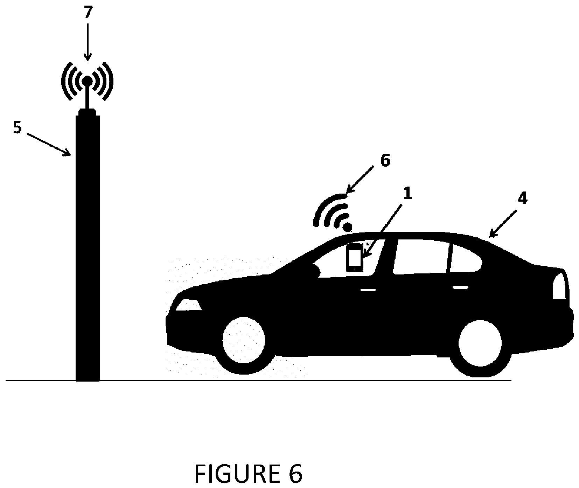

Figure 6 contains a diagram showing some of the components that make up the identification system of the present invention, corresponding to the specific case of a toll road, where the following are observed: the mobile device (1), the user's vehicle (4), the toll booth or toll gantry (5), the Wi-Fi signal (6), and the Wi-Fi antenna (7) which is part of the portal.

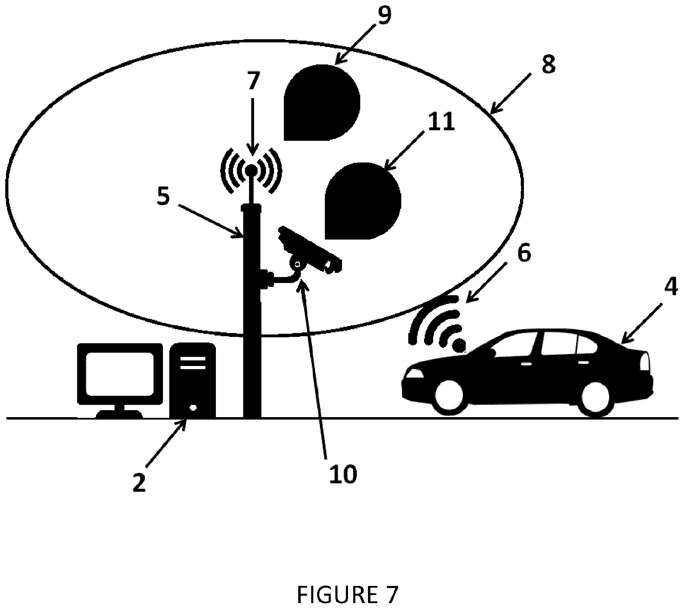

Figure 7 contains a diagram showing some of the components that make up the identification system of the present invention in its Embodiment 1, corresponding to the specific case of a toll road that has a toll gantry (5) through which cars pass freely, and not a toll booth, where the following are observed: the server (2), the user's vehicle (4), the toll gantry (5), the Wi-Fi signal (6), the Wi-Fi antenna (7) which is part of the portal (3), the detection range (8), the information sent in the Wi-Fi signal (9), the license plate recognition camera (LPR) (10), and the information corresponding to vehicles' license plates (11).

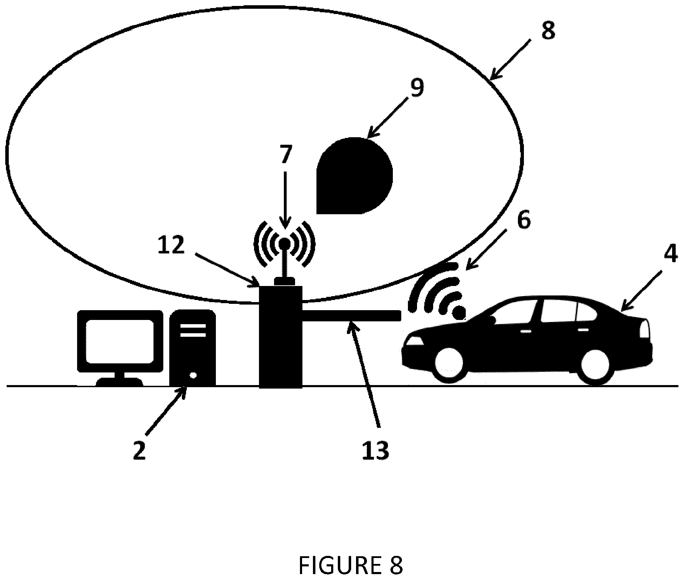

Figure 8 contains a diagram showing some of the components that make up the identification system of the present invention in its Embodiment 2, corresponding to the specific case of a toll road containing a tollbooth (12), which only provides access to cars when payment has been verified, where the following are observed: the server (2), the user's vehicle (4), the Wi-Fi signal (6), the Wi-Fi antenna (7) which is part of the portal (3), the detection range (8), the information broadcast in the Wi-Fi signal (9), and the access barrier (13).

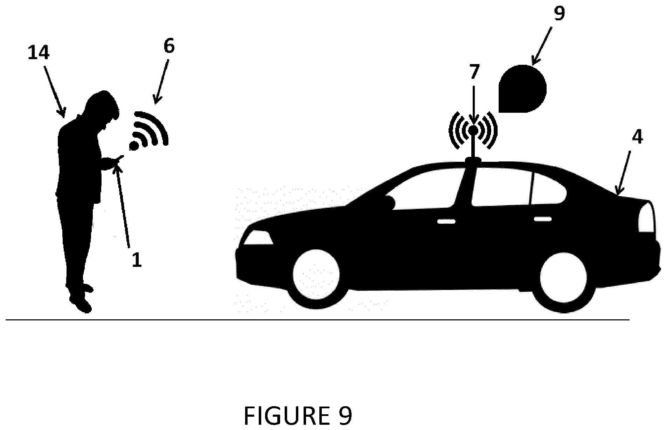

Figure 9 contains a diagram showing some of the components that make up the identification system of the present invention in its Embodiment 3, corresponding to the specific case of a user accessing a car, where the following are observed: the mobile device (1), the user's vehicle (4), the Wi-Fi signal (6), the Wi-Fi antenna (7) which is part of the portal (3), the information broadcast in the Wi-Fi signal (9), and the user (14).

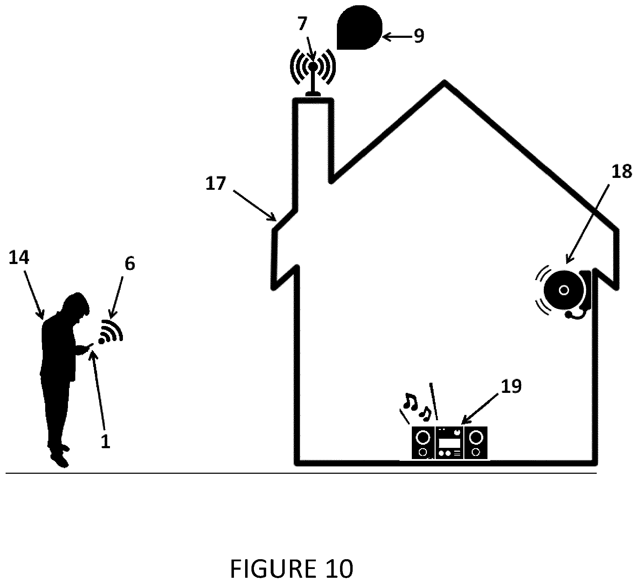

Figure 10 contains a diagram showing some of the components that make up the identification system of the present invention in its Embodiment 4, corresponding to the specific case of a user controlling several things in a house (17), where the following are observed: the mobile device (1), the Wi-Fi signal (6), the Wi-Fi antenna (7) which is part of the portal (3), the information broadcast in the Wi-Fi signal (9), the user (14), the house (17), the alarm system (18), and the music system (19).

### Detailed description of the invention

It is very important to highlight that the present invention contemplates three different communication levels, which are mentioned below:
1. The first communication level, which consists of simple identification and authentication.
2. The second communication level, which consists of identification and authentication together with one or more instructions.
3. The third communication level, which consists of identification and authentication together with the establishment of a connection.

The above communication levels can be adapted to a great variety of needs in different industrial fields, however they all are encompassed in the identification method of the present invention, which will be explained below.

The identification method of the present invention is made up of four general steps (Figure 3) which are:
Step 1: the user installs the application in the mobile device (1);
Step 2: the mobile device (1) exchanges keys with the portal (3); wherein the user (14) and the portal (3), can exchange keys in multiple ways, where some of them are:
   - The key may be an encrypted file which is received when pre-enrolling or enrolling online.
   - The key may be exchanged by scanning a code, which can be a barcode or a QR code;
Step 3: the application starts; wherein the application can be started automatically based on environmental factors, such as position, optionally aided by its GPS module, or manually when the user starts the application; and
Step 4: the portal (3) detects the mobile device (1) and runs defined actions.

While these are the general steps of the method, Steps 3 and 4 will be explained in detail below, as these steps may have different variants, depending on the level of communication required:
As seen in the first line of Figure 4, corresponding to the first level of communication, the application starts automatically, semi-automatically or manually; the application generates an OTP (one time password); the application calculates the parameters necessary for identifying the mobile device, wherein said parameters can be calculated based on the OTP; and the mobile device (1) acts as an access point (hotspot) and broadcasts the parameters that have been calculated, wherein the application will broadcast the following information:
- SSID: the OTP.
- BSSID: The MAC address of the wireless interface of the mobile device (1).
- Optional fields: Wi-Fi channel, encryption, WPS, Wi-Fi password.

As shown in the second line of Figure 4, for the second communication level, the application starts automatically, semi-automatically or manually; the user chooses a command; the application generates an OTP; the application calculates the parameters required for identification of the mobile device based on the OTP and the user-selected order (14), wherein the order can be incorporated into the OTP, or to any other network parameter broadcast by the mobile device (1) when acting as an access point (hot spot); the device (1) acts as an access point and broadcasts the parameters that have been calculated; these parameters are:
- SSID: Calculated by the application
- BSSID: The MAC address of the wireless interface of the mobile device (1).
- Optional fields: Wi-Fi channel, encryption, WPS, Wi-Fi password.

As seen in the third line of Figure 4, for the third communication level, the application starts automatically, semi-automatically or manually; the application generates an OTP; the application calculates the parameters necessary for identifying the mobile device, which can be calculated based on the OTP; the device begins to function as an access point (hotspot) (DHCP service, DNS, etc.) and a connection between the mobile device and the portal is established;
As seen in the first line of Figure 5, corresponding to the first communication level, the portal (3) through an algorithm filters any mobile device that is broadcasting a Wi-Fi signal to identify whether it might be a user of the system; in other words if the signal which is being broadcast has the predefined format for system users the portal (3) proceeds with authentication; the portal (3) then collects the other information of the Wi-Fi signal of the selected mobile device (access point); it then verifies if the mobile has been authenticated; if so, the portal (3) sends the information to the server and performs the default action (which may be to give access to a highway, parking lot, car, house, etc).

As shown in the second line of Figure 5, corresponding to the second communication level, the portal (3) through an algorithm filters any mobile device that is broadcasting a Wi-Fi signal to identify whether it might be a user of the system; in other words if the signal being broadcast has the predetermined format for system users the portal (3) continues with authentication; the portal (3) then collects the other information of the Wi-Fi signal from the selected mobile device (access point); then it verifies if the mobile has been authenticated; if so, the portal takes the order from the broadcast information, where the order can be incorporated into the OTP, based in a mathematical function, and / or broadcast through the SSID using any other parameters mentioned above; the portal performs the default action (which may be to give access to a car or to close it, to turn on the car's air conditioning, to turn on the lights of a house or activate / deactivate the alarm or sound system, etc).

As seen in the third line of Figure 5, corresponding to the third communication level, the portal (3), through an algorithm filters any mobile device that is broadcasting a Wi-Fi signal to identify whether it might be a user of the system; in other words if the signal being broadcast has the predetermined format for system users the portal (3) continues with authentication; the portal then collects the other information of the Wi-Fi signal from the selected mobile device (access point); it then verifies if the mobile has been authenticated; if so the portal connects to the mobile device, allowing network communication between the portal (3) and mobile device (1), and thus the mobile device (1) may establish a control of the portal (3) in real time.

Moreover, the system for the identification of mobile devices via Wi-Fi without the need of a connection is formed by
at least one mobile device (1), which is a mobile device with a Wi-Fi module, such as a smart phone or electronic tablet, which has an application or specialized program installed to allow the mobile device (1) to act as a hotspot, and so be detected and identified by a portal (3), upon the mobile device being activated by such application or specialized program to function as a "hotspot" or access point, and wherein said application or specialized program also run a proprietary algorithm which will generate an OTP for the mobile device (1) each time the service is used, such OTP being the network name generated by said device when it is activated as a "hotspot";
at least one optional local server (2), depending on the embodiment being required, which is a computer server, which may be remote (ie running on a machine separate to the portal) or local (ie the server is a component of the portal), which communicates with the mobile device (1) during pre-registration and with the portal (3) during operation of the system, characterized by allowing storage of the data in the accounts linked to the mobile devices (1), perform validation processes of these accounts, and depending on the embodiment charging the account linked to mobile device (1), storing, analyzing and processing information of the mobile device (1) relayed through the portal (3), communicating tasks to the portal (3) in addition to running a proprietary algorithm that will generate multiple OTPs, which it will compare with the network name generated by the mobile device when it is activated as a "hotspot" as part of the validation process of said mobile device; and
at least one portal (3), which includes a Wi-Fi detection antenna (7), a processing unit and optionally an actuator, wherein said portal (3) picks up the MAC address of each mobile device (1) as well as the network name generated by it, and optionally the type of encryption, the channel and the WPS for validation of the mobile device by the server (2), and which is connected to the server (2), and is characterized by being able to detect the mobile device (1) and to communicate with the server (2) to perform a process of identification, verification and if needed to carry out other corresponding actions (access, payment, etc.).

Having explained the method and the main parts of the identification system of the present invention, the joint operation between the system and method of identification will be explained.

The general operating principle of the present invention is based on the fact that any device with a Wi-Fi module can be used as an access point or "hotspot". When said device is being used as an access point or "hotspot" it broadcasts various data (SSID / BSSID / channel / encryption). These data are used to identify the device and the user.

System and method for the identification of mobile devices via Wi-Fi without the need of a connection, is able to locate and identify one or more mobile devices (1), provided such mobile devices (1) have an enabled Wi-Fi module, and have the application or specialized program for their detection and identification installed.

Such application may be downloaded in advance in any application store for the mobile device (1), such as Google Play, Windows store, Apple store, etc.

It is also important to note that a user will not necessarily have a user account in order to use the present invention, as this will depend on the service or function to be controlled. For example, in the case one seeks access to a car there will be no need to establish a register or account and a server will not be used.

Depending on the embodiment of the invention, once the application has been downloaded, the user must provide through it their personal registration data and other data as appropriate.

When personal pre-registration data have been provided, the mobile device (1) sends this information to the server (2), as shown in the first step (A) of Figure 1, linking an account to mobile device (1).

If necessary, in one embodiment of the invention, the server (2) in turn stores this pre-registration information and generates an encrypted configuration file, which is sent to the mobile device (1) as shown in the second step (B) of Figure 1, so that the application of the mobile device (1) becomes activated, leaving the pre-registration or subscription steps completed.

Following this, when the user arrives at the portal (3), the application installed in the mobile device (1) will generate an OTP, then said application will activate the Wi-Fi module of the mobile device (1) so it will act as a Wi-Fi access point or "hotspot", which will have an SSID (wireless network name) equal to the OTP generated and the portal (3) may collect information unique to the mobile device (1), such as the MAC address, the OTP broadcast as the name network, channel and encryption method.

If necessary, in one embodiment of the invention the OTP is generated by the server (2) and independently by the mobile application installed in the mobile device (1), such that when the portal (3) collects the data broadcast by the mobile device through the Wi-Fi signal, the server (2) may verify them.

In the server (2), in one embodiment of the invention, and independently in the application installed in the mobile device (1), a proprietary algorithm generates the channel of the Wi-Fi network, the encryption and the WPS, if necessary. These data are verified by the server (2) as part of the identification process of the mobile device (1).

If required, the portal (3), in one embodiment of the invention, is configured to only take into account the signal from the nearest mobile device (1), and through its Wi-Fi antenna obtains the following information from the mobile device (1):
- SSID: the OTP
- bssid: the MAC address of the wireless interface of the mobile interface
Additional information [Optional]: Wi-Fi channel, encryption, WPS and others.

If necessary, in one embodiment of the invention, the portal's Wi-Fi antenna (3) can be a series of Wi-Fi antennas for detecting the nearest mobile device to the portal.

In one embodiment of the invention, the information from the mobile device is sent from the portal (3) to the server (2) depending on the situation, as can be seen in the second step (D) of Figure 2, wherein the server (2) verifies the information received and compares it with the pre-registration database, as well as with the information generated by the above mentioned algorithms.

Depending on the situation, in one embodiment of the invention, if said information matches the information held by the server (2), it notifies the portal (3) which proceeds with the necessary action, as shown in the third step (E) of Figure 2, wherein in the fourth step (F), shown in Figure 2, the portal (3) confirms to the server (2) that the corresponding action was carried out successfully, and instructing the server (2) to carry out any additional actions required.

Note that in some of the actions described above, it has been specified that they depend on the situation, or that they are only necessary if required, since the present invention may be implemented in various embodiments, forms of implementation or options that will correspond to the service being provided after the user identification, so that, among other things, the use of a server will not always be required, nor will the system always take the mobile information of the device closest to the portal (3).

As for the application installed on the mobile device (1), it can have several variants or options that correspond to the service that will be provided following the user identification, such as paying a highway toll or parking, opening a controlled access, payment of services, etc.

It is important to point out that the various embodiments of the invention for all communication levels can be combined as required.

The first communication level of the present invention relates to a system and method for the identification of mobile devices via Wi-Fi without the need of a connection, where there will be a simple identification and authentication, to subsequently carry out a predefined action. The information (9) contained in the Wi-Fi signal (6) is transmitted to a server (2), which in turn compares it with user data contained in it to determine if there is a match in such data, Embodiment 1 being an example of this level of communication.

The second communication level of the present invention relates to a system and method for the identification of mobile devices via Wi-Fi without the need of a connection, wherein there will be a user identification and authentication together with one or more instructions to carry out a specific action chosen by the user, such as opening a car door, turning on the air conditioning, choose the temperature, etc.

At this level such instructions may be included within the OTP and / or within other parameters included in the Wi-Fi signal (6) transmitted by the mobile device (3) . Once the portal (3) detects such information, it will be sent to the server (2). It will then use the OTP and additional information to authenticate the mobile device (1) as explained above. If the authentication process is successful, the server (2) sends the instructions above the portal (3), and the portal will carry them out.

Regarding the second communication level, it will be used to give specific instructions chosen by the user, for example orders for a car such as opening it, closing it, starting the engine or air conditioning, giving instructions to a house, etc.

The third level of communication of the present invention relates to a system and method for the identification of mobile devices via Wi-Fi without the need of a connection, where there will be an identification and authentication along with the optional establishment of a connection.

At this level the mobile device (1) calculates the OTP (as explained above) and broadcasts it. When the portal (3) detects the signal it sends the information to the server (2), and once the server has authenticated the user, the portal (3) will connect to the device through the wireless network generated by the device (the connection may be made in any of the seven OSI levels).

Regarding the third communication level, it can be used in the case of the Internet of Things to allow connected devices to communicate securely with the user's mobile device so that it can control said connected devices, for example, lights, alarms, heaters, sensors, etc. in a building.

Additionally, the third communication level can be used to achieve a safe communication or connection with multiple cars.

In addition, the application can be configured in three main modes of activation, such as:
- Manual activation: The user opens the application and presses a button to activate the Wi-Fi mode.
- Semiautomatic activation: The user simply opens the application to achieve activation of the Wi-Fi mode.
- Automatic activation: The application runs in the background continuously, and it activates the Wi-Fi mode when the user approaches the portal (3).

In all cases, when the user approaches the portal (3) with their mobile device (1), the application broadcasts the required information through the Wi-Fi network which it generates, and the user identification is established.

One can have various security levels using one or more security methods from the following list:
- OTP
- Encrypted OTP
- BSSID
- Type of encryption
- WPS
- Hidden SSID
- Protected network (with a password, username, etc.)
- OTP generated by the server and sent via SMS, Internet or other method to the mobile device
- IMEI
- Others

The communication level and security level are different concepts, which can be combined together in various ways. That is, for each communication level there are several possible security levels.

Such security levels are not available in tags.

An advantage of this system and method for the identification of mobile devices via Wi-Fi without the need of a connection, is that it allows replacing a multitude of identification devices, thus avoiding the use of many tags or RFID cards to access roads, buildings, cars, etc, because only one mobile device (1) is needed with the corresponding application to achieve the identification, location and access control of the user.

Another advantage of the system and method for the identification of mobile devices via Wi-Fi without the need of a connection, is the ease of use and access to the system, since the user only needs to download a mobile application and (if appropriate) pre-register.

Additionally, system and method for the identification of mobile devices via Wi-Fi without the need of a connection, has a much greater range than the tag devices or RFID cards commonly used, since the range of Wi-Fi is enough to be easily detected over distances of 30 to 200 meters depending on the device, the signal strength and other factors.

Another advantage presented by the system and method for the identification of mobile devices via Wi-Fi without the need of a connection, is that in one embodiment, the user's credit will not be lost if their mobile device (1) is lost, stolen or damaged, as happens with tags or RFIDs, since the credit depends on the linking of user accounts.

Moreover, the system and method for the identification of mobile devices via Wi-Fi without the need of a connection generates no interference, because when the application is closed the mobile device (1) is completely inactive and does not broadcast any interference signal, unlike tag or RFID devices.

The system and method for the identification of mobile devices via Wi-Fi without the need of a connection, allows the identification and location of mobile devices via Wi-Fi when these are in the detection range of the Wi-Fi antenna (7) which is part of the portal (3), as the Wi-Fi module of the mobile device (1) is enabled by the application, making it detectable by the portal (3) through the Wi-Fi antenna (7) .

Because of the identification characteristics provided by the system and method for the identification of mobile devices via Wi-Fi without the need of a connection, it can be used to perform various post-identification operations such as the payment of services, toll collection, payment of parking, access control, etc.

Additionally, the information that the mobile device (1) provides when its Wi-Fi module is activated, such as SSID, BSSID, channel and encryption, is sufficient to identify the device, so the present invention can operate without the need for the mobile device (1) to have a network connection, Internet, Bluetooth, SMS, SIM card or GPS.

Moreover, the present invention obviates the need for the user to enter a password or code, and when the user approaches the portal (3) with their mobile device (1), the application broadcasts the required information for user identification, to then carry out one or more tasks.

Thus, with the present invention, the application broadcasts the required information, which allows identification of the mobile device (1) without the need for it to connect to a portal (3), since the mobile device (1), when used as a "hotspot", broadcasts information that allows the user to be identified. However the mobile device (1) does not receive information from the portal (3) (except in the third communication level detailed above), thus avoiding the need to establish a connection, and therefore saving time so other subsequent tasks (payment of a toll booth or parking, access control to a building or car, etc.) can be carried out in a fast, easy, reliable and safe way for the user, and also avoiding dependence on other communication systems, such as a cell phone signal, Internet or GPS.

It should be noted that the present invention can be applied by replacing Wi-Fi technology with any wireless communication protocol (Bluetooth or others), with the same principles and results described herein, given the inherent capability of said protocols of broadcasting information that can be used to authenticate a user. The parts of the system and method that need to be adapted are:
a. The mobile device will have a module corresponding to the wireless communication protocol concerned (whether Bluetooth or other).
b. The Wi-Fi antenna will be replaced by an antenna that will have the capability to detect signals corresponding to the wireless communication protocol concerned.
c. The information (OTP, MAC address, encryption, channel, etc.) transmitted by the wireless communication protocol concerned will be limited by the inherent capability of said protocol.
d. In all cases, when the user approaches the portal (3) with their mobile device (1), the application broadcasts the required information using the wireless communications protocol concerned, the antenna on the portal (3) captures the signal and the information contained therein, and thus the identification of the user is established.

Figure 6 is now explained and some embodiments of the present invention are illustrated, which should not be considered as unique and limiting as they are only intended to show examples of possible uses of the system and method for the identification of mobile devices via Wi-Fi without the need of a connection.

Figure 6 shows some of the components that make up the identification system of the present invention in Embodiments 1 and 2, for the specific case of a toll road.

In such cases, the user's vehicle (4) approaches the toll booth or gantry (5), and by means of the mobile device (1) a Wi-Fi signal (6) is broadcast which contains certain information unique to the user. This information will be received by means of the Wi-Fi antenna (7) which is part of the portal (3).

### Embodiment 1

Figure 7 shows the operation of the invention in Embodiment 1, for the specific case of a toll road with a toll gantry (5) where cars pass freely, and not a toll booth with a barrier.

In this specific case, the user's vehicle (4) approaches the toll gantry broadcasting via the mobile device (1) a Wi-Fi signal (6), which is received by the Wi-Fi antenna (7) which is part of the portal (3), when the signal enters its detection range (8). The information (9) contained in the Wi-Fi signal (6) is transmitted to a server (2), which in turn compares it with the user data contained in it to determine if there is a match with such data. If there is, the user is charged a toll. At the same time the license plate recognition (LPR) camera (10) receives the registration numbers of vehicles (11), which are transmitted to the server (2). If one of the license plates read matches the user's license plate, the toll associated with such registration is taken as "paid". If none of the license plates read matches the user's license plate, they receive a message asking them to rectify the license plate associated with their account. License plates that do not match with any user account within a specified time (eg 48 hours) will be taken as "unpaid" and will receive a fine.

### Embodiment 2

Figure 8 shows the operation of the invention in the specific case of Embodiment 2, corresponding to a toll road containing a toll booth (12), which only provides access to vehicles when payment has been verified.

In this specific case the user's vehicle (4) approaches the toll booth, broadcasting via the mobile device (1) a Wi-Fi signal (6), which is received by the Wi-Fi antenna (7) that is part of the portal (3), when the signal enters its detection range (8). The information (9) contained in the Wi-Fi signal (6) is transmitted to a server (2), which in turn compares it with the data contained in it to determine if there is a match with the data. If there is, the access barrier (13) allows access to the user and the server (2) performs the necessary steps to collect the toll from the user. If there is no match with the data on the server access is denied. Note that in this version of the invention there is no need to make a match with the user license plate.

### Embodiment 3

Figure 9 shows the operation of the invention in its Embodiment 3, in the specific case of a user accessing a car.

In this specific case the user (14) when approaching their vehicle (4) opens the application in their mobile device (1), which causes it to begin broadcasting a Wi-Fi signal (6), which is received by the Wi-Fi antenna (7) which is part of the portal (3), in the user's vehicle (4).

Here we can have two use cases depending on the level of communication.

First, in the case of the second communication level (ie inclusion of a hidden order in the OTP), the information (9) contained in the Wi-Fi signal (6) is transmitted to a program (15) inside the user's vehicle (4), which in turn compares it with the data contained in it (16) to determine if there is a match in the data. If there is, the vehicle performs the desired task (such as opening the car door, starting the air conditioning, turning on the motor, etc).

This embodiment can be used to give various commands to the user's vehicle (4). For example, one can include in the WPS parameter a number (0 or 1) to open or close the door. One can access the vehicle's temperature control with a number in the channel parameter that can specify temperature. Thus one may pre-heat a vehicle in cold places or pre-cool it in hot places several minutes before the user enters the vehicle.

Second, in the case of the third level communication (ie the portal carries out a complete connection with the mobile device, which acts as a hotspot, using a username and password), once the vehicle (4) detects the user's Wi-Fi (6) a complete connection will be established between the vehicle and the mobile device (1). After connecting, the user can control the vehicle (for example via an interface in the mobile device). An advantage of this scenario is that the user (14) can be connected to several vehicles at the same time or continue to give several commands to a vehicle in real time.

### Embodiment 4

Figure 10 shows the operation of the invention in its Embodiment 4, corresponding to the specific case of a user controlling various things in a house (17).

In this specific case the user (14), as they approach their house (17), opens the application in their mobile device (1), which causes it to start broadcasting a Wi-Fi signal (6), which is received by the Wi-FI antenna (7) which is part of the portal (3), at the house (17).

We have here two use cases as in the automobile application given above.

For the case of the second communication level (ie inclusion of a hidden order in the OTP), the information (9) contained in the Wi-Fi signal (6) is transmitted to a program (15) within the house, which in turn compares it with the data contained therein to determine if there is a match in the data. If there is, the alarm system (18) if the house is activated or deactivated, or instructions may be included to control the music system (19), the temperature control and many more components.

The third communication level for the example of controlling the components of a house would work analogously to the embodiment of the car.

## Claims

1. A method for the identification of mobile devices via Wi-Fi without the need of a connection, which is **characterized by** being comprised of four main general steps, which are:
Step 1: the user installs the application in the mobile device (1);
Step 2: the mobile device (1) exchanges keys with the portal (3), wherein the user (14) and the portal (3) can exchange keys in multiple ways;
Step 3: the application starts, wherein said application can be started automatically based on environmental factors, such as position, optionally with the aid of its GPS module, semi automatically or manually; and
Step 4: the portal (3) detects the mobile device (1) and runs defined actions;
wherein said method can operate under three different communication levels, which are:
First communication level: which consists of simple identification and authentication;
Second communication level: which consists of identification and authentication together with one or more instructions; and
Third communication level, which consists of identification and authentication together with the establishment of a connection.

2. A method for the identification of mobile devices via Wi-Fi without the need of a connection, in accordance with claim 1, wherein said key can be an encrypted file that is received when subscribing when carrying out the pre-registration or registration online.

3. A method for the identification of mobile devices via Wi-Fi without the need of a connection, in accordance with claim 1, wherein said key can be exchanged by scanning a code, which can be a bar code or a QR code.

4. A method for the identification of mobile devices via Wi-Fi without the need of a connection, in accordance with claim 1, wherein said steps may have different variants, depending on the communication level required.

5. A method for the identification of mobile devices via Wi-Fi without the need of a connection, in accordance with claim 4 wherein the first variant of Step 3 corresponds to the first communication level, comprising the following steps:
the application starts automatically, semi-automatically or manually;
the application generates an OTP (one time password);
the application calculates the parameters necessary to identify the mobile device, wherein said parameters can be calculated based on the OTP; and
the mobile device (1) acts as access point (hotspot) and broadcasts the parameters that have been calculated, wherein the application will broadcast the following information:
• SSID: The OTP
• BSSID: The MAC address of the wireless interface of the mobile device (1)
• Optional information: Wi-Fi channel, encryption, WPS, Wi-Fi password

6. A method for the identification of mobile devices via Wi-Fi without the need of a connection, in accordance with claim 4 wherein the second variant of Step 3 corresponds to the second communication level, comprising the following steps:
the application starts automatically, semi-automatically or manually;
the user chooses a command;
the application generates an OTP;
the application calculates the parameters necessary to identify the mobile device, which can be calculated based on the OTP and the order selected by the user (14), wherein the order can be incorporated into the OTP, or to any other parameter of the network broadcast by the mobile device (1), acting as an access point (hot spot);
the device (1) acts as an access point and broadcasts the calculated parameters, which are:
• SSID: Calculated by the application
• BSSID: The MAC address of the wireless interface of the mobile device (1)
• Optional information: Wi-Fi channel, encryption, WPS, Wi-Fi password

7. A method for the identification of mobile devices via Wi-Fi without the need of a connection, in accordance with claim 4 wherein the third variant of Step 3 corresponds to the third communication level, comprising the following steps:
The application starts automatically, semi-automatically or manually;
the application generates an OTP;
the application calculates the parameters of the connection, which can be calculated based on the OTP;
the device begins to function as an access point;
and a connection between the mobile device and the portal is established;

8. A method for the identification of mobile devices via Wi-Fi without the need of a connection, in accordance with claim 4, wherein the first variant of Step 4 corresponds to the first communication level, comprising the following steps:
the portal (3) through an algorithm filters any mobile device broadcasting a Wi-Fi signal to identify whether it might be a system user; in other words if the Wi-Fi signal has the predetermined format for system users the portal (3) continues with authentication;
the portal then collects the other information in the Wi-Fi signal from the selected mobile device (access point);
it then verifies if the mobile has been authenticated; if so, the portal sends the information to the server and carries out the predetermined action (which may be to give access to a highway, a parking lot, a car, a house, etc).

9. A method for the identification of mobile devices via Wi-Fi without the need of a connection, in accordance with claim 4 wherein the second variant of Step 4 corresponds to the second communication level, comprising the following steps:
the portal (3) through an algorithm filters any mobile device that is broadcasting a Wi-Fi signal to identify whether it might be a system user; in other words if the signal being broadcast has the predetermined format for system users the portal (3) continues with the authentication;
the portal then collects the other information in the Wi-Fi signal of the selected mobile device (access point);
it then verifies if the mobile device has been authenticated; if so, the portal extracts the command from the broadcast information, where the order can be incorporated into the OTP, based on a mathematical function, and / or transmitted through the SSID, or may be transmitted using any other parameter mentioned above;
the portal performs the default action (which may be to give access to a car or close it, turn on its air conditioning, turn on the lights of a house or activate / deactivate the alarm or sound system, etc).

10. A method for the identification of mobile devices via Wi-Fi without the need of a connection, in accordance with claim 4 wherein the third variant of Step 4 corresponds to the third communication level, comprising the following steps:
the portal (3) through an algorithm filters any mobile device that is broadcasting a Wi-Fi signal to identify whether it might be a system user; in other words if the signal being broadcast has the predetermined format for system users the portal (3) continues with the authentication;
the portal then collects the other information in the Wi-Fi signal of the selected mobile device (access point);
it then verifies if the mobile device has been authenticated; if so the portal connects to the mobile device, allowing a network communication between the portal (3) and the mobile device (1), and thus the mobile device (1) may establish control of the portal (3) in real time.

11. A system for the identification of mobile devices via Wi-Fi without the need of a connection, which is formed by
at least one mobile device (1);
at least one optional server (2); and
at least one portal (3);
that can operate in three different communication levels, which are:
First communication level, which consists of simple identification and authentication;
Second communication level, which consists of identification and authentication together with one or more instructions; and
Third communication level, which consists of identification and authentication together with the establishment of a connection;

12. A system for the identification of mobile devices via Wi-Fi without the need of a connection, in accordance with claim 11, wherein said mobile device (1) is a mobile device with a Wi-Fi module, such as a smartphone or electronic tablet, which has an application or specialized program to allow the mobile device (1) to act as a hotspot and thus be detected and identified by a portal (3).

13. A system for the identification of mobile devices via Wi-Fi without the need of a connection, in accordance with claim 12, wherein the application or specialized program allows the mobile device (1) to act as a "hotspot" or access point, and wherein said application or specialized program will also run a proprietary algorithm that will generate an OTP for the mobile device (1) each time the service is used, the OTP being the name of the network generated by the device when it is activated as a "hotspot";

14. A system for the identification of mobile devices via Wi-Fi without the need of a connection, in accordance with claim 11, wherein said server (2) is a computer server, which may be remote (ie it is operating in a machine distinct from the portal) or local (ie the server is a component of the portal), which communicates with the mobile device (1) during pre-registration and with the portal (3) during operation of the system.

15. A system for the identification of mobile devices via Wi-Fi without the need of a connection, in accordance with claim 14, wherein said server (2) allows the storing of data from accounts linked to the mobile devices (1), the performance of validation processes of such accounts, and depending on the embodiment, charging to the account linked to the mobile device (1), storing, analyzing and processing the information from the mobile device (1) communicated through the portal (3), communicating tasks to the portal (3), in addition to running a proprietary algorithm that will generate multiple OTPs, which it will compare with the network name generated by the mobile device when it is activated as a "hotspot", as part of the validation process of said mobile device.

16. A system for the identification of mobile devices via Wi-Fi without the need of a connection, in accordance with claim 11, wherein said portal (3) includes a Wi-Fi detecting antenna (7), a processing unit and optionally an actuator, wherein said portal (3) picks up the MAC address of each mobile device (1) as well as the network name generated by it, and optionally its type of encryption, the channel and the WPS for validation of the mobile device by the server (2), and which is connected to the server (2).

17. A system for the identification of mobile devices via Wi-Fi without the need of a connection, in accordance with claim 16, wherein said portal (3) includes a Wi-Fi detecting antenna (7), a processing unit and optionally an actuator, wherein said portal (3) is **characterized by** its ability to detect the mobile device (1) and communicate with the server (2) to carry out a process of identification, verification and if needed to carry out other appropriate actions (access, payment, etc.).

18. A system for the identification of mobile devices via Wi-Fi without the need of a connection, in accordance with claim 11, wherein its general operation principle is based on the fact that any device with a Wi-Fi module can be used as an access point or "hotspot", because when said device is being used as an access point or "hotspot" it broadcasts various data (SSID / BSSID / channel / encryption), and said data are used to identify the device and the user.

19. A system and method for the identification of mobile devices via Wi-Fi without the need of a connection, in accordance with claim 11, which is able to locate and identify one or more mobile devices (1) as long as such mobile devices (1) have a Wi-Fi module activated, and have installed the application or specialized program for their detection and identification.

20. A system and method for the identification of mobile devices via Wi-Fi without the need of a connection, in accordance with claim 19, wherein said application may be downloaded in advance through any application store for the mobile device (1), such as Google Play, Windows store, Apple store, etc.

21. A system and method for the identification of mobile devices via Wi-Fi without the need of a connection, in accordance with claim 11, wherein the user will not necessarily have a user account to use the present invention, as this will depend on the service or function to be controlled, since in some cases there will be no need to establish a register or an account and a server will not be used.

22. A system and method for the identification of mobile devices via Wi-Fi without the need of a connection, in accordance with claims 1 and 11, wherein depending on the embodiment of the invention, once the application has been downloaded, the user must provide personal registration data through the application, and other data where appropriate.

23. A system and method for the identification of mobile devices via Wi-Fi without the need of a connection, in accordance with claim 22, wherein depending on the embodiment, the mobile device (1) sends this information to the server (2) when personal pre-registration data have been provided, thus linking an account to the mobile device (1).

24. A system and method for the identification of mobile devices via Wi-Fi without the need of a connection, in accordance with claim 23, wherein if necessary, in one embodiment of the invention, the server (2) stores this pre-registration information and generates an encrypted configuration file, which is sent to the mobile device (1), so that the application of the mobile device (1) is activated, the pre-registration or subscription thus being completed.

25. A system and method for the identification of mobile devices via Wi-Fi without the need of a connection, in accordance with claim 24, wherein the application installed in the mobile device (1) will generate an OTP when the user reaches the portal (3), then the application will activate the Wi-Fi module of the mobile device (1) to act as a Wi-Fi access point or "hotspot", which will have an SSID (wireless network name) equal to the OTP generated, and the portal (3) will be able to collect information unique to the mobile device (1), such as the MAC address, the OTP transmitted as the network name, the channel and the encryption method.

26. A system and method for the identification of mobile devices via Wi-Fi without the need of a connection, in accordance with claims 1 and 11, wherein, if necessary, in one embodiment of the invention, the OTP will be generated by the server (2) and independently by the mobile application installed in the mobile device (1), such that when the portal (3) collects the data transmitted by the mobile device through the Wi-Fi signal, the server (2) may verify them.

27. A system and method for the identification of mobile devices via Wi-Fi without the need of a connection, in accordance with claim 26, wherein, in one embodiment of the invention, in the server (2), and independently in the application installed in the mobile device (1), a proprietary algorithm generates the channel of the Wi-Fi network, the encryption and the WPS, if necessary.

28. A system and method for the identification of mobile devices via Wi-Fi without the need of a connection, in accordance with claim 27, wherein the channel of the Wi-Fi network, the encryption and the WPS are verified by the server (2) as part of the identification process of the mobile device (1).

29. A system and method for the identification of mobile devices via Wi-Fi without the need of a connection, in accordance with claims 1 and 11, wherein, in one embodiment of the invention, said portal (3) is configured to only take into account the signal of the nearest mobile device (1) if so required, and through its Wi-Fi antenna obtains the following information from the mobile device (1):
• SSID: the OTP
• BSSID: The MAC address of the wireless interface of the mobile device
• Additional information [Optional]: Wi-Fi channel, encryption, WPS and other

30. A system and method for the identification of mobile devices via Wi-Fi without the need of a connection, in accordance with claims 1 and 11, wherein in one embodiment of the invention, if necessary, the Wi-Fi antenna (7) of the portal (3) can be a series of Wi-Fi antennas that will serve to detect the mobile device closest to the portal.

31. A system and method for the identification of mobile devices via Wi-Fi without the need of a connection, in accordance with claim 30, wherein, in one embodiment of the invention, depending on the situation, the mobile device information is sent from the portal (3) to the server (2), wherein the server (2) verifies the information received, and compares it with the pre-registration database, as well as with the information generated by the algorithms previously mentioned.

32. A system and method for the identification of mobile devices via Wi-Fi without the need of a connection, in accordance with claim 31, wherein in one embodiment of the invention, depending on the situation, if such information matches the information held by the server (2), the server notifies the portal (3) which carries out the necessary action, wherein in the fourth step, the portal (3) confirms to the server (2) that the task was carried out successfully, and instructing the server (2) to carry out any additional actions required.

33. A system and method for the identification of mobile devices via Wi-Fi without the need of a connection, in accordance with any of the preceding claims, wherein the present invention can be implemented in various embodiments, forms of implementation or options that will correspond to the service taking place following the user identification, so that among other things, the use of a server is not always be required, nor will one always take the mobile information of the closest device to the portal (3).

34. A system and method for the identification of mobile devices via Wi-Fi without the need of a connection, in accordance with any of the preceding claims, wherein the application installed in the mobile device (1) can have various embodiments, forms of implementation or options that will correspond to the service taking place after the user identification, for example highway tolls, parking, opening of controlled accesses, payment services, etc.

35. A system and method for the identification of mobile devices via Wi-Fi without the need of a connection, in accordance with any of the preceding claims, wherein the different embodiments of the invention for all communication levels can be combined with each other as required.

36. A system and method for the identification of mobile devices via Wi-Fi without the need of a connection, in accordance with claims 1 and 11, where in the first communication level there will be simple identification and authentication, to later perform a predefined action, and where the information (9) contained in the Wi-Fi signal (6) is transmitted to a server (2), which in turn compares it with user data contained in it to determine if there is a match.

37. A system and method for the identification of mobile devices via Wi-Fi without the need of a connection, in accordance with claims 1 and 11, where in the second communication level there will be an identification and authentication of the user with one or more instructions to accomplish a specific action the user chooses, such as opening a car door, turning on the air conditioning, choosing the temperature, etc.

38. A system and method for the identification of mobile devices via Wi-Fi without the need of a connection, in accordance with claim 37, wherein in said second level, the instructions may be included within the OTP and / or within other parameters included in the Wi-Fi signal (6) transmitted by the mobile device (3).

39. A system and method for the identification of mobile devices via Wi-Fi without the need of a connection, in accordance with claim 38, wherein once the portal (3) detects such information, it will be sent to the server (2), and then it will use the OTP and additional information to authenticate the mobile device (1).

40. A system and method for the identification of mobile devices via Wi-Fi without the need of a connection, in accordance with claim 39, wherein if the authentication process is successful, the server (2) will send the instructions to the portal (3) and the portal will carry them out.

41. A system and method for the identification of mobile devices via Wi-Fi without the need of a connection, in accordance with claim 37, wherein the second communication level can be used to give specific instructions selected by the user, for example commands to a car such as opening it, closing it, starting the engine or the air conditioning, giving instructions to a house, etc.

42. A system and method for the identification of mobile devices via Wi-Fi without the need of a connection, in accordance with claims 1 and 11, wherein in the third communication level there will be identification and authentication together with the optional establishment of a connection.

43. A system and method for the identification of mobile devices via Wi-Fi without the need of a connection, in accordance with claim 42, wherein in said third level, the mobile device (1) calculates the OTP and broadcasts it, while the portal (3) detects the signal and sends the information to the server (2), and once it has authenticated the user, the portal (3) connects to the device through the wireless network generated by the device.

44. A system and method for the identification of mobile devices via Wi-Fi without the need of a connection, in accordance with claim 43, wherein in said third level, the connection may be made in any of the seven OSI levels.

45. A system and method for the identification of mobile devices via Wi-Fi without the need of a connection, in accordance with claim 42, wherein the third communication level is used in the case of the Internet of Things to allow connected devices to communicate securely with the user's mobile device so that they can control said connected devices, for example lights, alarms, heaters, sensors, etc. in a building.

46. A system and method for the identification of mobile devices via Wi-Fi without the need of a connection, in accordance with claim 42, wherein the third communication level may also be used for a secure communication or connection with multiple cars.

47. A system and method for the identification of mobile devices via Wi-Fi without the need of a connection, in accordance with claims 1 and 11, wherein said application may be configured in three main activation modes, which are:
• Manual activation: The user opens the application and presses a button to activate the Wi-Fi mode;
• Semiautomatic Activation: The user only opens the application to enable activation of the Wi-Fi mode; and
• Automatic activation: The application runs in the background continuously, and it activates the Wi-Fi mode when the user approaches the portal (3).

48. A system and method for the identification of mobile devices via Wi-Fi without the need of a connection, in accordance with claim 47, where in the three main activation modes, the application broadcasts the required information through the Wi-Fi network, and the user identification is established when they approach the portal (3) with their mobile device (1).

49. A system and method for the identification of mobile devices via Wi-Fi without the need of a connection, in accordance with claims 1 and 11, wherein said application may have various security levels using one or more security methods from the following list:
• OTP
• Encrypted OTP
• BSSID
• Encryption Type
• WPS
• Hidden SSID
• Protected network (with password, username, etc.)
• OTP generated by the server and sent through SMS, Internet or other method to the mobile device
• IMEI
• Others

50. A system and method for the identification of mobile devices via Wi-Fi without the need of a connection, in accordance with claims 1, 11 and 49, wherein the communication level and security level are different concepts, which may be combined together in various ways, as for each communication level there are several possible security levels.

51. A system and method for the identification of mobile devices via Wi-Fi without the need of a connection, in accordance with any of the preceding claims, **characterized in that** it permits replacing a multitude of identification devices, obviating the use of numerous tags or RFID cards for access to roads, buildings, cars, etc, as only one mobile device (1) is needed with the corresponding application to achieve the identification, location and access control of the user.

52. A system and method for the identification of mobile devices via Wi-Fi without the need of a connection, in accordance with any of the preceding claims, **characterized by** allowing an easy use and access to the system, since the user only needs to download a mobile application and carry out its pre-registration, where applicable.

53. A system and method for the identification of mobile devices via Wi-Fi without the need of a connection, in accordance with any of the preceding claims, **characterized in that** it has a much greater range than the tags or RFID cards devices commonly used, as the range of Wi-Fi is strong enough to be detected easily over distances of 30 to 200 meters depending on the device, the signal strength and other factors.

54. A system and method for the identification of mobile devices via Wi-Fi without the need of a connection, in accordance with any of the preceding claims, **characterized in that** in one embodiment the user's credit is not lost if the mobile device (1) is lost, stolen or damaged, as happens with tags or RFIDs, since the credit depends on a linkage of user accounts.

55. A system and method for the identification of mobile devices via Wi-Fi without the need of a connection, in accordance with any of the preceding claims, **characterized in that** it presents no interference, because when the application is closed the mobile device (1) is left completely inactive and broadcasts no interference signals, unlike tags or RFIDs.

56. A system and method for the identification of mobile devices via Wi-Fi without the need of a connection, in accordance with any of the preceding claims, **characterized in that** it allows the identification and location of mobile devices via Wi-Fi when these are within the detection range of the Wi-Fi antenna (7) which is part of the portal (3), as the Wi-Fi module of the mobile device (1) has been enabled by the application, making it detectable by the portal (3) through the Wi-Fi antenna (7).

57. A system and method for the identification of mobile devices via Wi-Fi without the need of a connection, in accordance with any of the preceding claims, **characterized in that** it can be used to carry out various post-identification operations such as the payment of services, toll collection, parking payments, access control, etc.

58. A system and method for the identification of mobile devices via Wi-Fi without the need of a connection, in accordance with any of the preceding claims, **characterized in that** it can operate without the need for the mobile device (1) to have a network connection, Internet, Bluetooth, SMS, SIM card or GPS.

59. A system and method for the identification of mobile devices via Wi-Fi without the need of a connection, in accordance with any of the preceding claims, **characterized in that** the user is not required to enter a password or code, and when the user approaches the portal (3) with their mobile device (1), the application broadcasts the information required for the user identification and then performs one or more tasks.

60. A system and method for the identification of mobile devices via Wi-Fi without the need of a connection, in accordance with any of the preceding claims, **characterized in that** the application broadcasts the required information, which allows the identification of the mobile device (1) without the need for it to connect to a portal (3), since the mobile device (1), when used as a "hotspot", broadcasts information that allows its identification.

61. A system and method for the identification of mobile devices via Wi-Fi without the need of a connection, in accordance with any of the preceding claims, **characterized in that** the mobile device (1) does not receive information from the portal (3), except in the third communication level, thus obviating the need to establish a connection, and therefore saving time in carrying out other subsequent actions, such as paying a toll or parking, access control to a building or car, etc., thus making them fast, easy, reliable and safe for the user, and also avoiding a dependence on other communication systems, such as a cell phone signal, the Internet or GPS.

62. A system and method for the identification of mobile devices via Wi-Fi without the need of a connection, in accordance with any preceding claim, wherein any wireless communication protocol can be used with the same principles and results described herein, given the inherent capability of said protocols of broadcasting information that can be used to authenticate a user.
